**Europäisches Patentamt**

**European Patent Office**

**Office européen des brevets**

(19)

(11) Veröffentlichungsnummer: **0 111 742**
**A2**

(12) # EUROPÄISCHE PATENTANMELDUNG

(21) Anmeldenummer: **83111307.1**

(22) Anmeldetag: **12.11.83**

(51) Int. Cl.³: **A 21 D 8/04**
**A 23 K 1/00**

(30) Priorität: **14.12.82 DE 3246186**

(43) Veröffentlichungstag der Anmeldung:
**27.06.84 Patentblatt 84/26**

(84) Benannte Vertragsstaaten:
**AT BE CH DE FR GB IT LI LU NL SE**

(71) Anmelder: **Kanne, Wilhelm, sen.**
**Im Geistwinkel 40**
**D-4670 Lünen(DE)**

(72) Erfinder: **Kanne, Wilhelm, sen.**
**Im Geistwinkel 40**
**D-4670 Lünen(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) Verfahren zur Herstellung eines lebensfähige Mikroorganismen enthaltenden Mehles.

(57) Zur Schaffung eines Verfahrens, mit dem hochwertige Nährstoffe, insbesondere die Milchsäurebakterien, erhalten und für eine Wiederverwendung nutzbar gemacht werden können, ist vorgesehen, daß Sauerteigbrote im Natursauerverfahren aus Getreide, insbesondere aus biologisch-dynamischen Anbauten, hergestellt werden, daß anschließend diese Sauerteigbrote mit Wasser versetzt und einer spontanen Säuerung unterworfen werden, daß anschließend die Flüssigkeit abgezogen wird, daß das verbleibende Produkt getrocknet und anschließend gemahlen wird. Ein so hergestelltes Mehl ist für die menschliche, tierische oder pflanzliche Ernährung als Packungszuschlagstoff zur Behandlung äußerlicher Verletzungen des menschlichen, tierischen oder pflanzlichen Organismusses sowie zur Kultivierung und Kompostierung von Böden einsetzbar.

EP 0 111 742 A2

"Verfahren zur Herstellung eines lebensfähige Mikroorganismen enthaltenden Mehles"

----------------------------------------------------------------

Die Erfindung richtet sich auf ein Verfahren zur Herstellung eines lebensfähige Mikroorganismen, insbesondere Milchsäurebakterien, enthaltenden Mehles, sowie
auf ein nach diesem Verfahren hergestelltes Mehl und
dessen Verwendungen.

Bei Standardverfahren zur Herstellung von Mehl ist es
bekannt, das Getreidekorn auf eine den Wünschen des
Verbrauchers entsprechende Feinheit zu mahlen. Durch
den Mahlvorgang werden die äußeren Schalen des Getreidekornes abgeschält und anschließend ausgesiebt. Je
feiner nun das Korn gemahlen wird, desto größer ist der
Anteil der abgeschälten und ausgesiebten Kornschalen.
Auf diese Weise wird der Nährgehalt des Mehles, wie
wissenschaftliche Untersuchungen zeigen, stark gemindert. Auf diesem Weg gehen also der menschlichen Ernährung Nährstoffe verloren.

Bei einem Verfahren zur Erzeugung eines Getränkes der
Anmelderin (EP-A1 0 054 122) wird u.a. Sauerteigbrot
mit Wasser versetzt und einer spontanen Säuerung unterworfen, wobei das Sauerteigbrot aus im Natursauerverfahren hergestelltem Teig mit Mehl aus biologisch-dynamischen Anbauten stammenden Getreide gebacken ist. In-

0111742

folge eines Gärprozesses entsteht Milchsäure, deren Anteil an der Gesamtflüssigkeit sich nach der Verweilzeit der Sauerteigmasse in der Flüssigkeit richtet.

Nach Abzug der für die Getränkeherstellung verwendbaren Flüssigkeit bleibt eine Sauerteigmasse zurück. Wie Untersuchungen ergeben haben, sind in dieser Rückstandmasse z. T. hochwertige Stoffe enthalten.

Aufgabe der Erfindung ist es ein Verfahren zu schaffen, mit dem diese hochwertigen Nährstoffe, insbesondere die Milchsäurebakterien, erhalten und für eine Wiederverwendung nutzbar gemacht werden können.

Erfindungsgemäß wird diese Aufgabe dadurch gelöst, daß Sauerteigbrote im Natursauerverfahren hergestellt, daß anschließend diese Sauerteigbrote mit Wasser versetzt und einer spontanen Säuerung unterworfen werden, daß anschließend die Flüssigkeit abgezogen, das verbleibende Produkt getrocknet und schließlich gemahlen wird.

In erfinderischer Ausgestaltung des Verfahrens ist vorgesehen, daß nach Abzug der Flüssigkeit das verbleibende Produkt über mehrere Stunden gepreßt und anschliessend bei einer Temperatur getrocknet wird, die die Lebensfähigkeit der Mikroorganismen im Produkt gewährleistet.

In verfahrensmäßiger Fortführung ist vorgesehen, daß die Trocknung bei unter 40 Grad C als Lufttrocknung durchgeführt wird.

Die Mikroorganismen unterstützen die Schutzfunktion der Bakterien im Magen-Darm-Trakt beispielsweise gegen Krankheitserreger.

Grundsätzlich können für die Erfindung hochwertige Getreide eingesetzt werden. Allerdings sieht die Erfindung in besonderer Ausgestaltung vor, daß als Getreide Getreide aus biologisch-dynamischen Anbauten eingesetzt wird.

Erfindungsgemäß ist die Herstellung eines Mehles nach einem Verfahren der vorher bezeichneten Art vorgesehen, das sich dadurch auszeichnet, daß es als Mahlprodukt aus im Natursauerverfahren hergestellten, gebackenen und anschließend einer Spontansäuerung unterworfenen Broten unter Aufrechterhaltung der Lebensfähigkeit der durch die Säuerung entstandenen Mikroorganismen und Fermente gewonnen ist.

Das auf diese Weise gewonnene Mehl besitzt im Vergleich zu üblichen Mehlprodukten eine bessere Haltbarkeit und Verträglichkeit.

Weiter sieht die Erfindung auch ein Mehl vor, das sich durch die Verwendung als Lebensmittel für die menschliche Ernährung und/oder als Tierernährungszuschlagstoff und/oder als Zuschlagstoff zur Kultivierung und Kompostierung von Böden und/oder als Bestäubungsmittel von Saatgut auszeichnet.

Dient ein derartiges Mehl als menschliches Nahrungsmittel, so weisen die Gerichte, in denen ein derartiges Mehl eingesetzt wird, eine bessere Verträglichkeit gegenüber vergleichbaren, teilweise mit synthetischen Stoffen versetzten Nahrungsmitteln, auf. Ferner wird die Verdauungstätigkeit angeregt, so daß eine Verwendung auch als Beilage zu Gemüsesuppen, Eintopfgerichten u.s.w. möglich ist.

Wird das Mehl als Tierernährungszuschlagstoff eingesetzt, so fördert es die Eiweißverdauung tierischer Lebewesen, so daß z.B. die Biest- und/oder Kuhmilch besser ausgewertet werden kann, d.h. der Nährgehalt je Liter Milch erhöht wird.

Bei einem Einsatz zur Kultivierung und Kompostierung von Böden wird durch das Mehl erreicht, daß die Mikroorganismen den biologischen Umsetzungsvorgang in der Kompostmasse sehr günstig beeinflussen. Die Fruchtbarkeit eines mit solchem Humus vermischten Bodens nimmt daher zu.

Mit einer Bestäubung von Saatgut, z.B. von Saatgutgetreide, wird erreicht, daß sich das Milchsäurebakterien enthaltende Mehl an den feinen Härchen festsetzt, die das Korn umgeben und damit nach Einsaat unmittelbar den das Korn umgebenden Bereich beeinflussen, woraus sich eine große Widerstandsfähigkeit des so behandelten Getreides gegen Krankheitsanfall u. dgl. ergibt. Gleichzeitig wird durch den Kompostierungseffekt eine natürliche Düngung der Umgebung des Saatkornes erreicht.

In besonderer Ausgestaltung sieht die Erfindung ein Mehl vor, das als Backhilfsmittel, insbesondere zum Neuansatz von Sauerteig, einsetzbar ist.

Solche Backhilfsmittel eignen sich insbesondere als Ersatz für synthetische Hefe, gegen die in zunehmendem Maße immer mehr Menschen Allergien entwickeln.

In erfinderischer Ausgestaltung ist es vorgesehen, daß ein Mehl als Packungszuschlagsstoff zur Behandlung äußerlicher Verletzungen des menschlichen, tierischen oder pflanzlichen Organismusses einsetzbar ist, wobei das Mehl beispielsweise einseitig auf einem Trägerelement als Pulverschicht aufgebracht und die so entstehende Packung als Verband verwendet werden kann. Verbände dieser Art sind insbesondere in der Pflanzenheilkunde, beispielsweise auf dem Gebiet der Wundbehandlung von Baumrinden, einsetzbar.

Natürlich ist das beschriebene Verfahren nicht auf die Herstellung eines pulverisierten Mehles beschränkt. So kann beispielsweise ein Mehl mit entsprechenden natürlichen Bindemitteln vermischt zu (wasserlöslichen) Würfeln o. dgl. geformt und in dieser Form Gerichten beigemengt werden oder als Getränkepulver in einer Flüssigkeit (Milch oder Wasser) aufgelöst werden. Ferner ist die Herstellung von Trockenmassen denkbar, die im festen Zustand verzehrt werden, beispielsweise in Block- oder Riegelform als Pausenbrotersatz.

Neben den im einzelnen beanspruchten Einsatzgebieten eines nach dem erfindungsgemäßen Verfahren hergestellten Mehles kann dieses überall dort eingesetzt werden, wo es gilt, z. Zt. noch chemische Mittel, z.B. zur Verhinderung von Reblausbefall u. dgl., einzusetzen, da, wie Versuche gezeigt haben, die natürlichen Milchsäure- bakterien die Pflanzen widerstandsfähiger machen und/oder einen entsprechenden Befall verhindern.

Ansprüche:
----------

1. Verfahren zur Herstellung eines lebensfähige Mikroorganismen, insbesondere Milchsäurebakterien, enthaltenden Mehles,
   dadurch gekennzeichnet, daß
   Sauerteigbrote im Natursauerverfahren hergestellt,
   daß anschließend diese Sauerteigbrote mit Wasser
   versetzt und einer spontanen Säuerung unterworfen
   werden, daß anschließend die Flüssigkeit abgezogen,
   das verbleibende Produkt getrocknet und schließlich
   gemahlen wird.

2. Verfahren nach Anspruch 1,
   dadurch gekennzeichnet, daß
   nach Abzug der Flüssigkeit das verbleibende Produkt
   über mehrere Stunden gepreßt und anschließend bei
   einer Temperatur getrocknet wird, die die Lebensfähigkeit der Mikroorganismen im Produkt gewährleistet.

3. Verfahren nach Anspruch 2,
   dadurch gekennzeichnet, daß
   die Trocknung bei unter 40 Grad C als Lufttrocknung
   durchgeführt wird.

BAD ORIGINAL

4. Verfahren nach Anspruch 1 oder einem der folgenden, dadurch gekennzeichnet, daß

als Getreide Getreide aus biologisch-dynamischen Anbauten eingesetzt wird.

5. Mehl, hergestellt nach einem Verfahren der vorangehenden Ansprüche,

dadurch gekennzeichnet, daß

es als Mahlprodukt aus im Natursäureverfahren hergestellten, gebackenen und anschließend einer Spontansäuerung unterworfenen Broten unter Aufrechterhaltung der Lebensfähigkeit und Fermente gewonnen ist.

6. Mehl nach Anspruch 5,

gekennzeichnet durch

die Verwendung als Lebensmittel für die menschliche Ernährung und/oder als Tierernährungszuschlagstoff und/oder als Zuschlagstoff zur Kultivierung und Kompostierung von Böden und/oder als Bestäubungsmittel von Saatgut.

7. Mehl nach Anspruch 5,

gekennzeichnet durch

die Verwendung als Backhilfsmittel, insbesondere zum Neuansatz von Sauerteig.

6. Mehl nach Anspruch 5,

gekennzeichnet durch

die Verwendung als Packungszuschlagstoff zur Behandlung äuberlicher Verletzungen des menschlichen,

tierischen oder pflanzlichen Organismusses.